# DEMANDE DE BREVET EUROPEEN

(11) **EP 1 732 042 A1**
(43) Date de publication de la demande: **13.12.2006**
(21) Numéro de dépôt: 06290914.8
(22) Date de dépôt: 06.06.2006
(51) Int. Cl.: G06T 15/20

(54) **Procédé et système d'élaboration de caractéristiques géométriques d'une image encodée numériquement**

(30) Priorité: 08.06.2005 FR 0505835
(71) Demandeur: Decopole, 33800 Bordeaux (FR)
(72) Inventeur: Dittlo, Nicolas, 33000 Bordeaux (FR); Amyot, Sebastien, Erika 306 33000 Bordeaux (FR)
(74) Mandataire: Dossmann, Gérard

(57) **Abrégé**

Le système d'élaboration de caractéristiques géométriques d'une image encodée numériquement comprend un dispositif d'affichage (2) apte à afficher une image numérisée, communiquant avec une unité de commande (4), et comprenant une interface homme-machine (6) et des moyens de fourniture de données (3) au système via ladite interface homme-machine (6). Le système comprend, en outre, :
un moyen d'affichage (7) pour afficher une image encodée numériquement sur le dispositif d'affichage (2),
un premier moyen de délimitation (8) pour délimiter une portion de l'image représentant une surface sensiblement plane,
un moyen de traitement (9) pour appliquer un motif géométrique déformable prédéterminé sur l'image à l'endroit de ladite portion d'image délimitée et déformer le motif de manière à le faire correspondre à ladite portion d'image, et
un moyen de détermination (10) pour déterminer des caractéristiques géométriques de ladite surface à partir de la déformation du motif.

## Description

La présente invention porte sur l'élaboration de caractéristiques géométriques d'une image encodée numériquement, et plus particulièrement sur un procédé et un système d'élaboration de caractéristiques géométriques d'une image numérique pour permettre de simuler des changements de revêtements de surfaces sur l'image.

Il existe des procédés mis en oeuvre par ordinateurs qui permettent de simuler des changements de revêtements de surfaces à partir d'une image encodée numériquement. De tels procédés sont généralement contraignants, car ils nécessitent d'effectuer des préparatifs fastidieux pour créer une image spécifique comprenant des éléments de référence permettant de déduire les caractéristiques géométriques de l'image.

On pourra à cet égard se référer au document GB 2 404 512 qui décrit un procédé mis en oeuvre par ordinateur pour déterminer des caractéristiques géométriques d'une image. L'image doit provenir d'une photographie prise en positionnant, de manière précise et prédéterminée, des éléments de référence sous la forme de mires sur différentes surfaces planes à photographier, généralement des murs, sols ou plafond de pièces. Le rendu à l'image de ces éléments ainsi que la connaissance des dimensions des éléments permet, selon le procédé mis en oeuvre, d'extraire des caractéristiques géométriques de l'image, afin de pouvoir ensuite simuler à l'image des revêtements différents sur des surfaces de la pièce.

Un tel procédé est difficilement mis en oeuvre par un utilisateur non averti, et nécessite de fastidieuses préparations afin d'obtenir une image susceptible d'être modifiée en changeant, par exemple, les revêtements de certaines surfaces.

En outre la petite taille relative des éléments de références disposés sur les surfaces à photographier, amène un manque de précision dans l'extraction des caractéristiques géométriques.

L'invention se propose donc de remédier à ces inconvénients, et propose de déterminer des caractéristiques géométriques d'une image encodée numériquement, sans nécessiter de traitement préalable des surfaces lors de la prise de vue des surfaces sur lesquelles on souhaite simuler un autre revêtement.

Ainsi, il est proposé, selon un aspect de l'invention, un procédé d'élaboration de caractéristiques géométriques d'une image encodée numériquement. Selon ce procédé, on visualise l'image, et l'on délimite une portion de l'image représentant une surface sensiblement plane. On applique alors un motif géométrique déformable prédéterminé sur l'image à l'endroit de ladite portion d'image délimitée, on déforme le motif de manière à le faire correspondre à ladite portion d'image, et l'on détermine des caractéristiques géométriques de ladite surface à partir de la déformation du motif.

Il n'est donc pas nécessaire d'effectuer des opérations fastidieuses de préparation des surfaces avant de prendre une photographie servant de base à l'image numérisée.
Les caractéristiques géométriques sont déterminées à partir de la déformation des motifs géométriques mis en correspondance avec les différentes surfaces.

En outre, la précision des données géométriques extraites est améliorée.

Les caractéristiques géométriques comprennent notamment les angles formés par deux couples de droites de l'image, respectivement représentatifs de deux couples de droites parallèles dans la réalité, la direction des droites d'un couple étant perpendiculaire à la direction des droites de l'autre couple. Les caractéristiques géométriques comprennent également les rapports d'échelles entre les tailles réelles des éléments et leur taille sur l'image.

Dans un mode de mise en oeuvre préféré, on sélectionne un revêtement parmi un ensemble de revêtements stocké dans une base de données, et on élabore une image de ladite surface recouverte par ledit revêtement en fonction des caractéristiques géométriques de la surface.

Il est possible de simuler des changements de revêtements de surfaces, et de visualiser le résultat de manière immédiate. Il est alors aisé de choisir les revêtements que l'on désire mettre sur les surfaces, comme des parquets, des peintures, ou des papiers peints.

L'invention permet à partir d'une simple photo encodée numériquement, de visualiser immédiatement un nombre illimité de changement de décoration d'une pièce, et ainsi de pouvoir choisir la décoration de son choix pour cette pièce.

Bien entendu, l'invention s'applique à des surfaces intérieures d'une pièce ainsi qu'à des surfaces extérieures d'un bâtiment.

Avantageusement, le motif est une grille comprenant un quadrillage constitué d'un ensemble prédéterminé de lignes et de colonnes de carrés élémentaires de surface prédéterminée.

Un tel motif est simple, facile à manipuler, et facilite les calculs des données géométriques.

Dans un premier mode de mise en oeuvre, pour chacune des deux directions de ladite portion d'image représentant ladite surface, on indique la taille réelle d'un élément de ladite surface visualisée selon un axe de la grille superposée.

Cela permet d'indiquer précisément des distances selon les deux axes de la grille, et ainsi de déterminer les autres distances nécessaires, selon les deux axes.

Dans un deuxième mode de mise en oeuvre, on adapte le nombre de lignes et de colonnes de la grille en fonction de la taille d'un côté d'un carré élémentaire de la grille et des dimensions de ladite surface.

On indique alors, de manière différente, les distances selon les deux axes de la grille, afin de permettre de déterminer les autres distances nécessaires, selon les deux axes.

Avantageusement, on délimite une ou plusieurs portions de ladite image correspondant à la représentation d'objets situés devant ladite surface.

Ainsi, le changement de revêtement ne sera pas appliqué à ces éléments, qui se trouvent devant la surface dont on veut simuler un changement de revêtement.

En outre, on utilise un zoom pour affiner la délimitation desdites portions de ladite image correspondant à la représentation desdits objets situés devant ladite surface et/ou la délimitation de ladite portion de ladite image représentant ladite surface.

Le zoom permet de définir de manière plus nette les contours d'objets et surfaces, afin d'obtenir un résultat plus précis.

En outre, on ajuste les motifs géométriques respectivement superposés à une pluralité de portions de l'image représentant des surfaces sensiblement planes.

On ajuste précisément, de manière manuelle ou automatique les motifs géométriques aux portions d'images respectives. En outre, lorsque deux surfaces sur lesquelles on veut simuler un autre revêtement se touchent par un côté commun, les motifs géométriques sont automatiquement ajustés de manière à ce que lors de la génération de la nouvelle image, les deux revêtements respectifs des surfaces se touchent parfaitement.

Avantageusement, on pré-visualise les positions respectives desdites portions d'images délimitées et/ou on pré-visualise le positionnement respectifs des motifs géométriques.

Une telle pré-visualisation permet de vérifier le positionnement respectif des portions d'image détourées, avant de débuter le traitement de simulation. Il est également possible de vérifier le bon positionnement des motifs géométriques sur les portions d'images correspondant aux surfaces planes.

En outre, il est possible de définir les positions respectives desdites portions d'images délimitées.

Cela permet de définir le positionnement d'éléments de l'image les uns par rapport aux autres.

Il est également possible de grouper plusieurs portions délimitées de l'image représentant des surfaces sensiblement planes, pour élaborer une image desdites surfaces de groupement recouvertes simultanément par un même revêtement sélectionné.

Le fait de pouvoir grouper ou dégrouper un ensemble de portions délimitées de l'image permet de choisir un revêtement commun à un groupe de surfaces et de le simuler sur toutes ces surfaces en une seule fois.

Avantageusement, on prend en compte les ombres et lumières présentes sur lesdites surfaces, et on restitue lesdites ombres et lumières sur les images élaborées comprenant les surfaces recouvertes par des revêtements respectifs, en tenant compte dudit revêtement.

Il est alors possible de visualiser les effets de l'éclairage sur le revêtement simulé.

Dans un mode de mise en oeuvre préféré, on mémorise des images non traitées, des images comprenant lesdites portions délimitées, et des images avec surfaces simulées recouvertes par un revêtement.

Il est possible de mémoriser toutes les images, afin de pouvoir en disposer lorsqu'on en a besoin, et ainsi éviter de recommencer un travail déjà effectué auparavant.

Selon un autre aspect de l'invention, il est également proposé un programme d'ordinateur stocké sur un support de stockage de données, qui comprend des codes d'instructions adaptés pour mettre en oeuvre un procédé tel que précédemment décrit, lorsqu'il est exécuté au sein d'un module de calcul.

Il est également proposé, selon un autre aspect de l'invention, un système d'élaboration de caractéristiques géométriques d'une image encodée numériquement comprenant un dispositif d'affichage apte à afficher une image numérisée, communiquant avec une unité de commande, et comprenant une interface homme-machine et des moyens de fourniture de données au système via ladite interface homme-machine. Le système comprend un moyen d'affichage pour afficher une image encodée numériquement sur le dispositif d'affichage, et un premier moyen de délimitation pour délimiter une portion de l'image représentant une surface sensiblement plane. Le système comprend également un moyen de traitement pour appliquer un motif géométrique déformable prédéterminé sur l'image à l'endroit de ladite portion d'image délimitée et déformer le motif de manière à le faire correspondre à ladite portion d'image, et un moyen de détermination pour déterminer des caractéristiques géométriques de ladite surface à partir de la déformation du motif.

Avantageusement, le système comprend en outre un moyen de sélection pour sélectionner un revêtement parmi un ensemble de revêtements stocké dans une base de données, et un moyen d'élaboration pour élaborer une image de ladite surface recouverte par ledit revêtement en fonction des caractéristiques géométriques de la surface.

Dans un mode de réalisation préféré, le moyen de traitement est adapté pour appliquer une grille comprenant un quadrillage constitué d'un ensemble prédéterminé de lignes et de colonnes de carrés élémentaires de surface prédéterminée.

Dans un premier mode de réalisation, le système comprend un moyen d'indication pour indiquer la taille réelle d'un élément de ladite surface visualisée selon un axe de la grille superposée, pour chacune des deux dimensions de ladite portion d'image représentant ladite surface.

Dans un deuxième mode de réalisation, le système comprend un moyen d'adaptation, pour adapter le nombre de lignes et de colonnes de la grille en fonction de la taille d'un côté d'un carré élémentaire de la grille et des dimensions de ladite surface.

Avantageusement, le système comprend un deuxième moyen de délimitation pour délimiter une ou plusieurs portions de ladite image correspondant à la représentation d'objets situés devant ladite surface.

Dans un mode de réalisation préféré, le système comprend un moyen de zoom pour affiner la délimitation desdites portions de ladite image correspondant à la représentation desdits objets situés devant ladite surface et/ou la délimitation de ladite portion de ladite image représentant ladite surface.

Dans un mode de réalisation avantageux, le système comprend un moyen d'ajustement pour ajuster les motifs géométriques respectivement superposés à une pluralité de portions de l'image représentant des surfaces sensiblement planes.

Dans un mode de réalisation préféré, le système comprend un moyen de pré-visualisation pour pré-visualiser les positions respectives desdites portions d'images délimitées.

En outre, le système comprend un moyen de modification des positions respectives desdites portions d'images délimitées.

Avantageusement, le système comprend un moyen de groupement pour grouper plusieurs portions délimitées de l'image représentant des surfaces sensiblement planes. Ledit moyen d'élaboration est apte à élaborer une image desdites surfaces de groupement recouvertes simultanément par un même revêtement sélectionné.

Dans un mode de réalisation préféré, le système comprend un moyen de masque pour prendre en compte les ombres et lumières présentes sur lesdites surfaces, et restituer lesdites ombres et lumières sur les images élaborées comprenant les surfaces recouvertes par des revêtements respectifs, en tenant compte dudit revêtement.

En outre, le système comprend un moyen de mémorisation pour mémoriser des images non traitées, des images comprenant lesdites portions délimitées, et des images avec surfaces simulées recouvertes par un revêtement.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique illustrant un premier mode de réalisation d'un système selon l'invention ;
- la figure 2 est un schéma synoptique illustrant un deuxième mode de réalisation d'un système selon l'invention ;
- les figures 3a et 3b illustrent un premier mode de mise en oeuvre d'un procédé selon un aspect de l'invention ;
- les figures 4a et 4b illustrent un deuxième mode de mise en oeuvre d'un procédé selon un aspect de l'invention ; et
- les figures 5 à 24 illustrent une mise en oeuvre par ordinateur du procédé selon un aspect de l'invention.

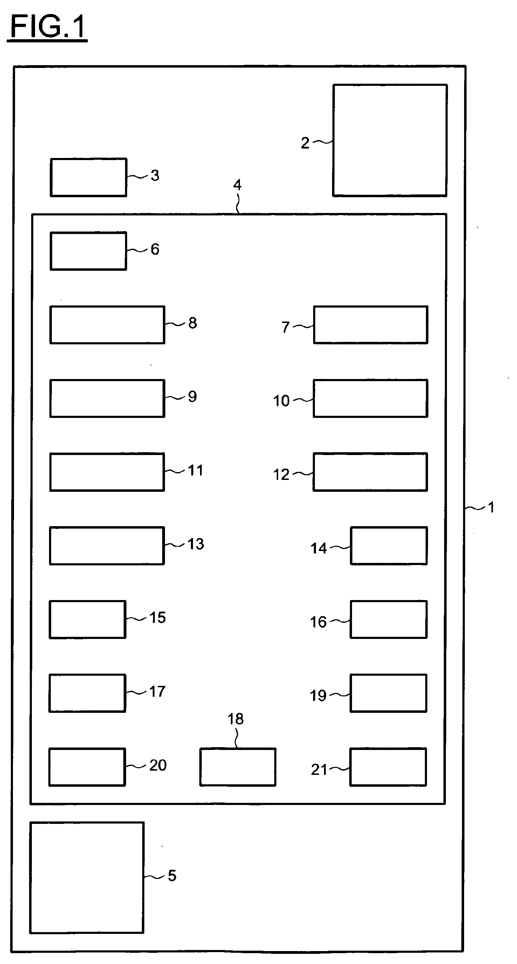

Comme on peut le voir sur la figure 1, le système 1 comprend un dispositif d'affichage 2, par exemple un écran. Un module de fourniture de données 3, comprenant, par exemple, un clavier ou une souris, permet à un utilisateur de fournir des données au système 1.

Le système 1 comprend en outre une unité de commande 4 et une base de données 5 de motifs prédéterminés correspondant à des revêtements que l'on désire simuler sur des portions d'une image encodée numériquement, représentant des surfaces sensiblement planes.

L'unité de commande 4 comprend une interface homme/machine 6, traitant notamment les données fournies par le module de fourniture de données 3, généralement par un clavier ou une souris informatique.

L'unité de commande 4 comprend un module d'affichage 7 permettant d'afficher une image encodée numériquement sur le dispositif d'affichage 2. Le module d'affichage 7 permet, en outre, de faire pivoter l'image sur le dispositif d'affichage 2, si celle-ci n'est pas affichée dans le bon sens.

L'unité de commande 4 comprend également un premier module de délimitation 8 pour délimiter une portion de l'image représentant une surface sensiblement plane.

L'unité de commande 4 comprend, en outre, un module de traitement 9, permettant d'appliquer un motif géométrique déformable prédéterminé sur une portion d'image délimitée au moyen du premier module de délimitation 8, et permettant de déformer le motif géométrique de manière à le faire correspondre à ladite portion d'image représentant une surface sensiblement plane.

Un module de détermination 10 permet de déterminer des caractéristiques géométriques d'une surface dont ladite portion d'image a été délimitée, à partir de la déformation du motif.

Dans la suite de la description, le motif géométrique est une grille. Bien entendu, l'invention s'applique de manière générale à tout autre motif géométrique qui convient.

Un moyen de sélection 11, permet de sélectionner un revêtement par surface ou groupe de surfaces à simuler, parmi l'ensemble de revêtements stocké dans la base de données 5. Un moyen d'élaboration 12 permet d'élaborer une image sur laquelle une ou plusieurs surfaces sont recouvertes par le ou les revêtements sélectionnés en fonction des caractéristiques géométriques de la surface.

Le moyen de traitement 9 permet d'appliquer une grille comprenant un quadrillage constitué d'un ensemble prédéterminé de lignes et de colonnes de carrés élémentaires de surface prédéterminée.

Un moyen d'indication 13 permet d'indiquer la taille réelle d'un élément de ladite surface visualisée, selon un axe de la grille superposée, cela pour chacune des deux dimensions de ladite portion d'image représentant ladite surface. En d'autres termes, selon chaque axe de la grille superposée, on indique la taille réelle d'un élément de ladite surface.

Un deuxième module de délimitation 14 permet de délimiter une ou plusieurs portions de l'image correspondant à la représentation d'objets situés devant une surface à simuler.

Un module de zoom 15 permet d'affiner la délimitation des portions de l'image qui correspondent à la représentation d'objets situés devant la surface et/ou la délimitation de la portion de l'image représentant une surface à simuler.

Un module d'ajustement 16 permet d'ajuster les motifs géométriques, à savoir les grilles respectivement superposées à plusieurs portions de l'image représentant des surfaces sensiblement planes. Un tel ajustement permet de rendre cohérentes les différentes grilles entre-elles.

Le système 1 comprend également un module de pré-visualisation 17 permettant de pré-visualiser grossièrement les positions respectives desdites portions d'image délimitées et/ou le positionnement respectif des motifs géométriques.

Un module de définition 18 permet de définir des positions respectives des portions d'image délimitées.

Un module de groupement 19 permet de grouper ou dégrouper plusieurs portions délimitées de l'image représentant des surfaces sensiblement planes. Ainsi, plusieurs portions d'images groupées correspondant à plusieurs surfaces peuvent être simulées recouvertes simultanément par un même revêtement sélectionné.

Un module de masque 20 permet de prendre en compte les ombres et lumières présentes sur les surfaces, et de restituer les ombres et lumières sur les images élaborées comprenant les surfaces recouvertes par des revêtements respectifs sélectionnés, cela en tenant compte dudit revêtement.

Un module de mémorisation 21 permet de mémoriser des images non traitées, des images comprenant des portions délimitées, et des images avec des surfaces simulées recouvertes par un ou plusieurs revêtements. La mémorisation de telles images permet d'éviter de refaire un travail déjà fait, et de comparer plusieurs résultats finals afin de choisir le résultat que l'on préfère.

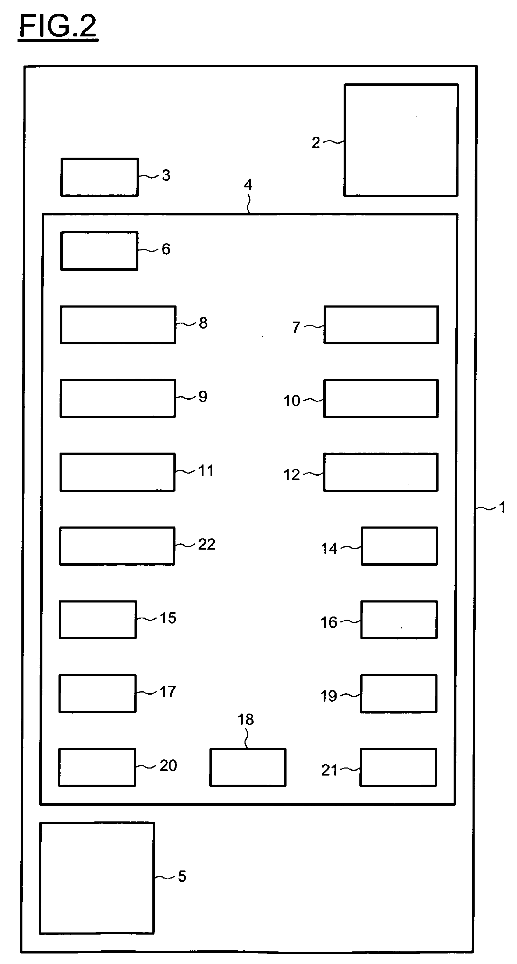

En variante, le système représenté sur la figure 2 comprend un module d'adaptation 22 à la place du module d'indication 13. Le module d'adaptation 22 permet d'adapter le nombre de lignes et de colonnes d'une grille en fonction de la taille d'un côté d'un carré élémentaire de la grille et des dimensions de la surface correspondant à la grille.

Cette variante montre une autre manière d'indiquer des ordres de taille utiles à l'élaboration de caractéristiques géométriques d'une image encodée numériquement.

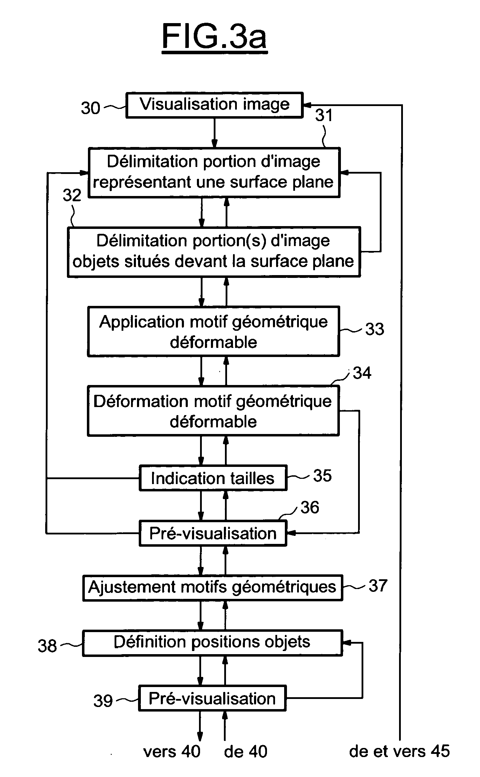

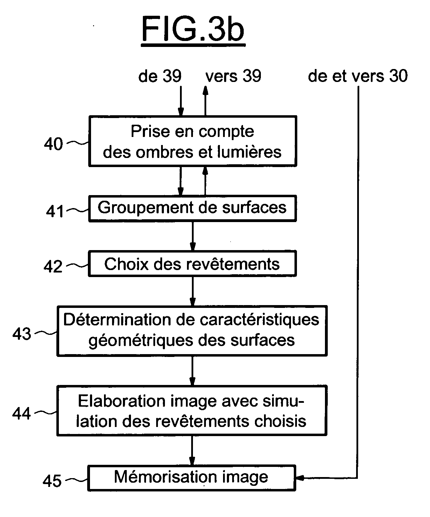

Les figures 3a et 3b représentent un exemple de mise en oeuvre du procédé selon un aspect de l'invention.

Dans l'application représentée, il s'agit de permettre à un opérateur de simuler un changement de matière, ou de couleur, d'un revêtement, peinture ou autre d'une chambre à coucher, aussi bien des surfaces de sol, plafond, mur, que des éléments de mobilier ou de décoration. En effet, des éléments de mobiliers ou de décoration peuvent être décomposés en un ensembles de surfaces sensiblement planes.

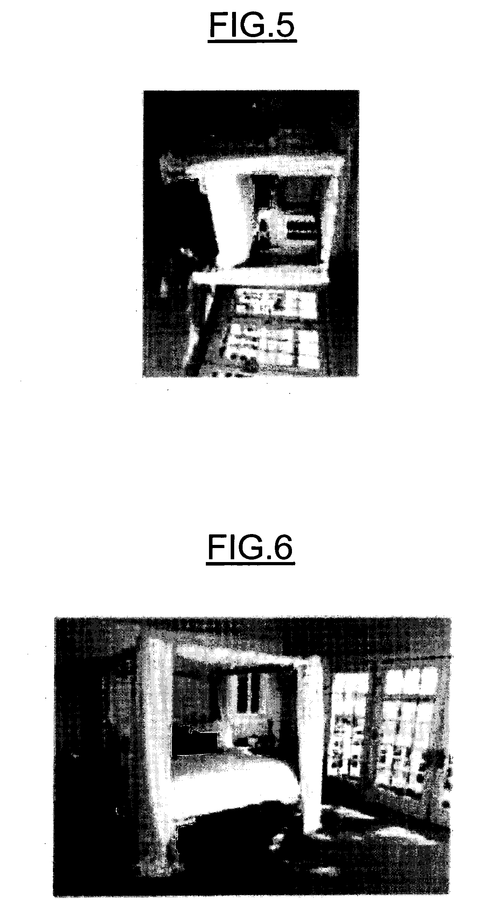

On commence par visualiser une image encodée numériquement (étape 30). Durant cette visualisation d'une image à traiter, on peut faire pivoter l'image sur le dispositif d'affichage 2 pour la mettre dans le bon sens, si celle-ci ne s'affiche pas par défaut dans le bon sens, en fonction de son encodage. Un tel exemple est illustré sur les figures 5 et 6. La visualisation de l'image à traiter, ainsi que l'éventuel pivotement, sont mis en oeuvre par le moyen d'affichage 7 et le dispositif d'affichage 2.

On délimite (étape 31) une portion de l'image représentant une surface plane sur laquelle on veut simuler un revêtement autre que celui réellement présent.

Dans la suite de la description, on considère que le dispositif d'affichage 2 est un écran, et que le module de fourniture de données 3 comprend un clavier et une souris.

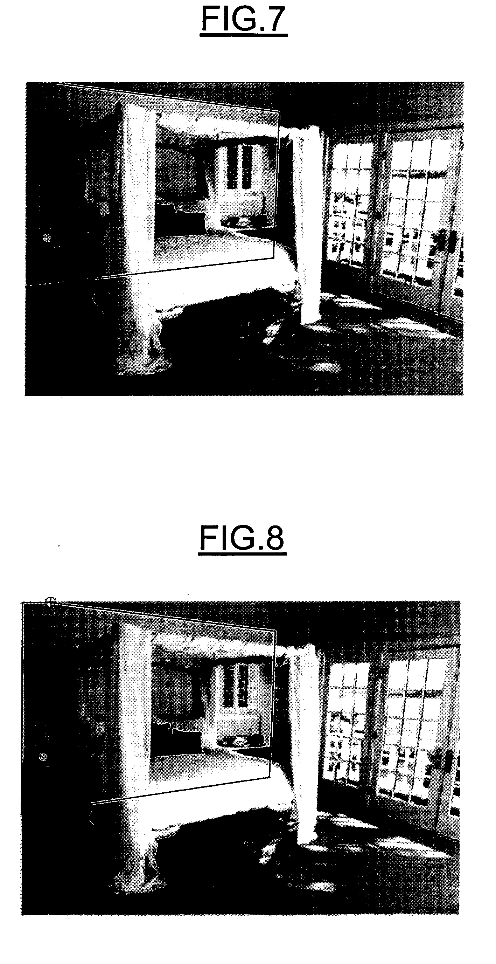

La délimitation de la portion d'image représentant une surface plane est effectuée en utilisant le premier moyen de délimitation 8. Cette délimitation est effectuée au moyen de la souris 3 et de l'écran 2, comme illustré sur les figures 7 et 8. Durant cette délimitation, on peut utiliser un module de zoom 15 afin d'affiner la délimitation du contour de la portion de l'image représentant la surface plane.

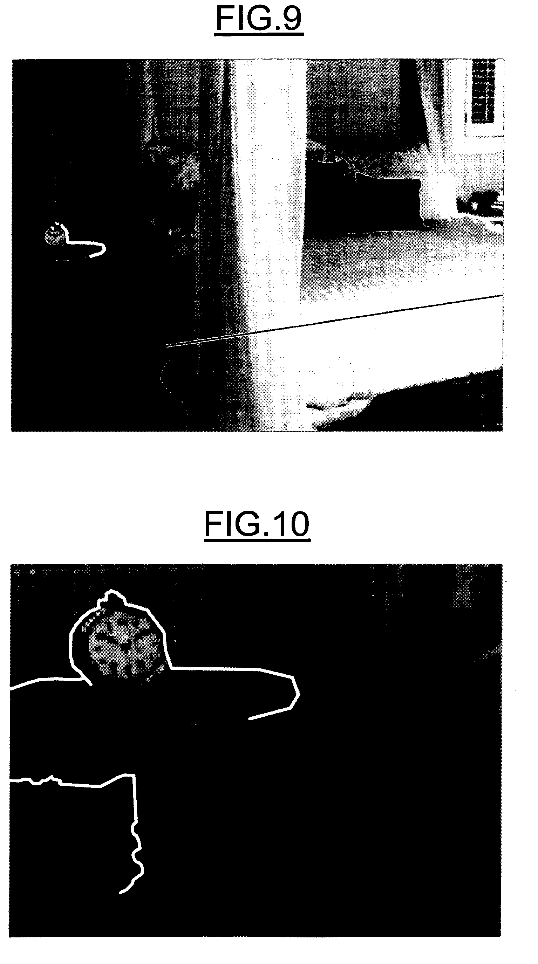

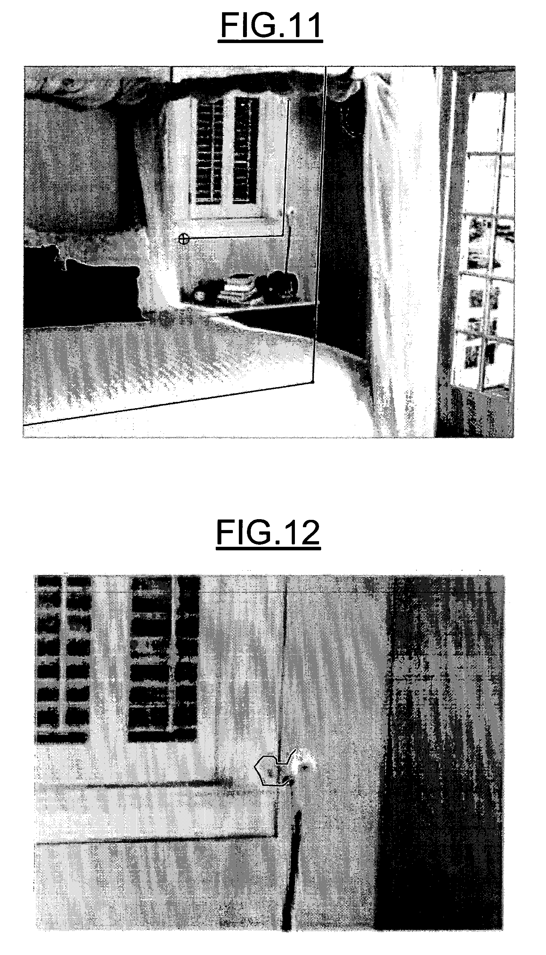

On délimite des portions d'image représentant des objets situés devant les surfaces planes que l'on a délimitées. De tels objets comprennent par exemple un guéridon sur lequel est posé un réveil, ou bien une fenêtre, comme illustré sur les figures 9, 10, 11, 12 et 13. Sur la figure 10, est illustrée l'utilisation d'un zoom pour délimiter de manière plus précise les objets situés devant la surface plane et à exclure de la simulation de revêtement. La délimitation des portions d'image représentant des objets situés devant ces surfaces planes est effectuée en utilisant le deuxième module de délimitation 14. Le zoom est mis en oeuvre au moyen du module de zoom 15.

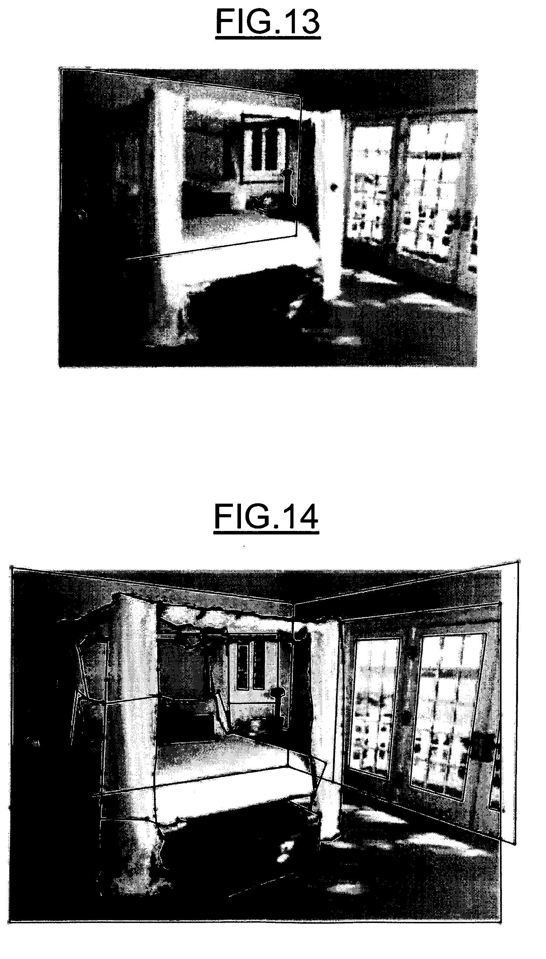

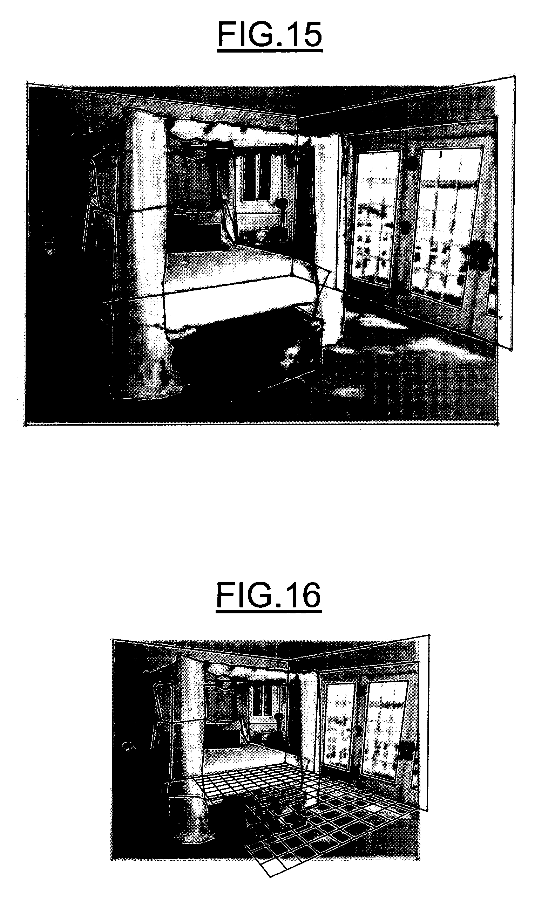

Ces délimitations (étapes 31 et 32) de portions d'image sont effectuées pour toutes les surfaces sensiblement planes sur lesquelles on désire simuler un revêtement autre, et pour toutes les portions d'image représentant des objets situés devant ces surfaces planes à simuler. Les figures 14 et 15 illustrent de telles délimitations de portions d'image correspondant à des surfaces planes et des objets situés devant celles-ci. Sur les figures 14 et 15, trois surfaces planes sont ainsi délimitées, deux murs et un sol d'une chambre à coucher. Les divers objets, tels que le guéridon, le lit et la malle qui sont à exclure des surfaces sur lesquelles on veut simuler un autre revêtement, apparaissent à l'affichage. La figure 15 représente un affinement des courbes de délimitation de la figure 14.

On applique un motif géométrique déformable (étape 33) sur les portions d'image délimitées représentant une surface plane à simuler.

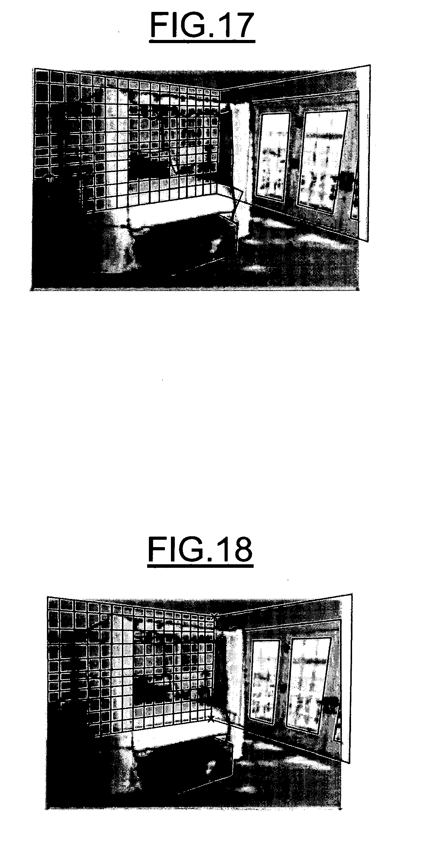

On déforme (étape 34) le motif géométrique déformable, afin que la grille se superpose à la portion d'image associée représentant une surface plane. Les figures 16 et 17 illustrent l'application et la déformation du motif géométrique, ici une grille, sur la chambre à coucher.

L'application et la déformation des grilles est effectuée par le module de traitement 9 et sont destinées à acquérir des informations relatives aux caractéristiques géométriques de la grille et de la déformation de la grille pour la faire coïncider avec une surface examinée.

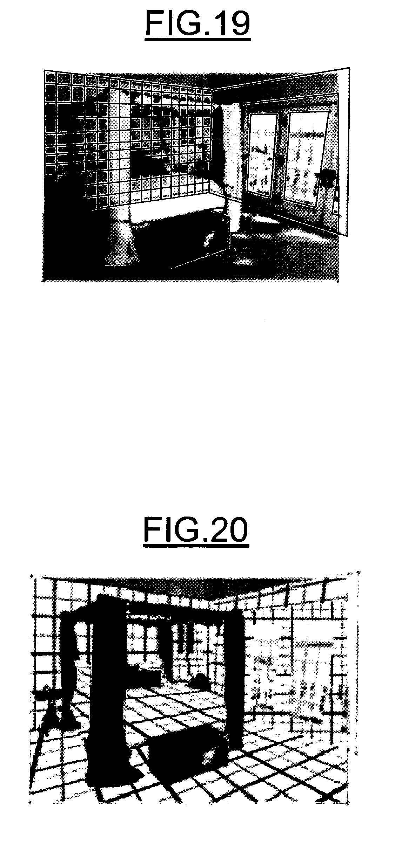

Pour une portion d'image représentant une surface à simuler, on indique (étape 35) la taille d'un élément selon chacun des deux axes de la grille. En d'autres termes, pour chaque portion d'image représentant une surface à simuler, il faut définir une hauteur d'un élément et une largeur d'un élément. Cette indication de taille (étape 36) est illustrée par les figures 18 et 19. La figure 18 illustre l'indication de la hauteur du mur située derrière le lit, et la figure 19 illustre l'indication de la largeur du lit. Pour la portion d'image correspondant à la surface du mur située derrière le lit, on a bien indiqué une indication de hauteur et une indication de largeur. Cette indication de taille est effectuée pour chacune des portions d'image représentant une surface à simuler, pour chaque axe de la grille, par le module d'indication 13.

Il est possible d'effectuer une pré-visualisation (étape 36) permettant d'afficher les différentes grilles de l'image afin de vérifier la cohérence qu'elles ont entre elles, au moyen du module de pré-visualisation 17. La figure 20 illustre une pré-visualisation de l'image représentant les grilles et objets détourés.

On ajuste (étape 37) les grilles entre-elles. L'ajustement peut être fait manuellement ou de manière automatique, au moyen du module d'ajustement 16.

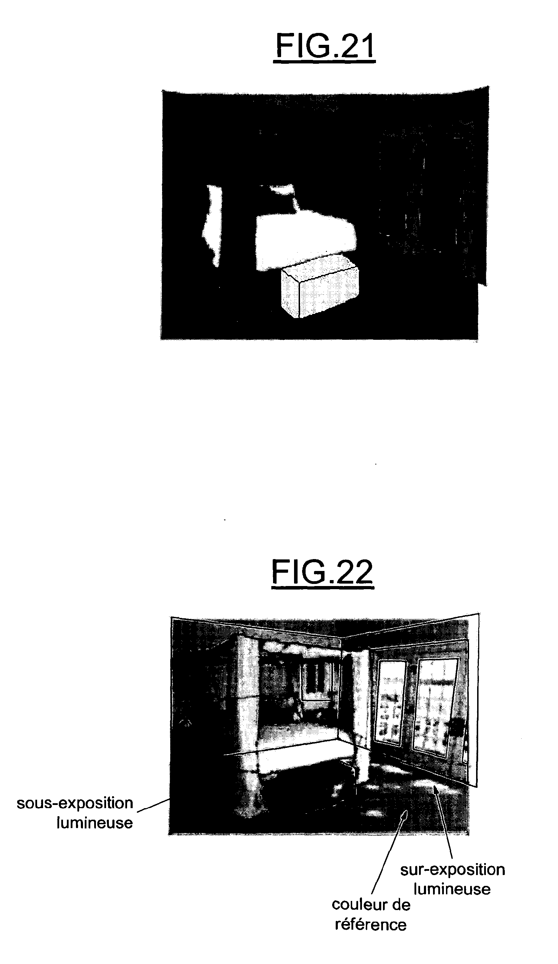

On définit la position (étape 38) des différents éléments correspondant aux portions d'image délimitées, comme cela est illustré sur la figure 21, par le biais du module de définition 18.

Il est possible de pré-visualiser (étape 39) les positions relatives de ces éléments, comme cela est illustré sur la figure 21.

On prend en compte (étape 40) les ombres et lumières, en définissant pour une surface, sur l'image, une localisation de la couleur de référence, c'est-à-dire une référence sans sous-exposition lumineuse ou sur-exposition lumineuse. Le module de masque 20 permet cette prise en compte des jeux de lumières sur les surfaces, et de les extrapoler sur les revêtements simulés. La localisation de la couleur de référence est illustrée sur la figure 22.

Les ombres et lumières sont prises en compte, en créant un masque d'ombre, en utilisant simultanément la couleur de référence, et une suppression, si nécessaire, de motifs indésirables de la photographie, par exemple un motif de papier peint, au moyen d'un filtre d'image appelé filtre passe-bas.

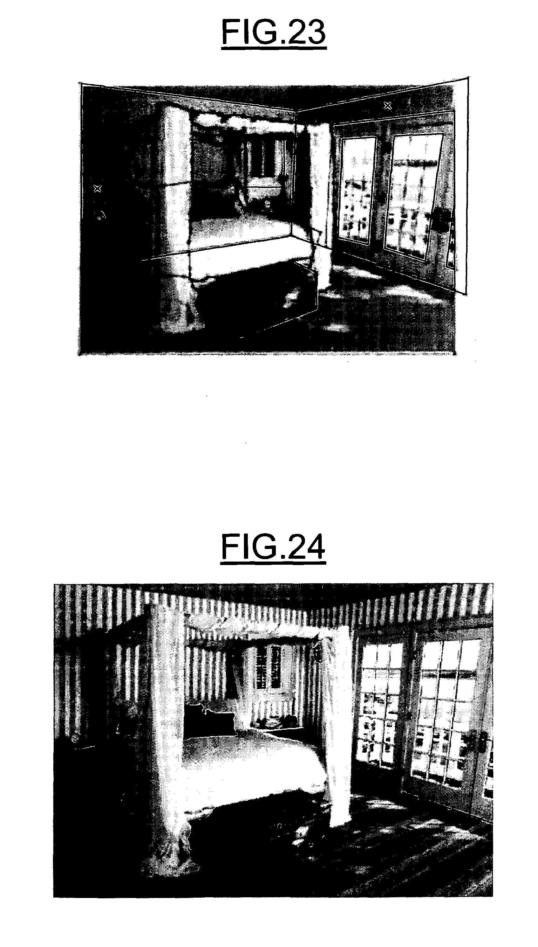

Il est possible d'effectuer un groupement de surface (étape 41) si l'on veut simuler une pluralité de portions de l'image représentant une pluralité de surfaces avec un même revêtement. Un exemple de groupement de deux surfaces, ici les deux murs, est illustré sur la figure 23. Le module de groupement 10 permet, par l'intermédiaire du module d'interface homme/machine 6, du dispositif d'affichage 7, et de la souris informatique 3, de sélectionner les deux surfaces à grouper, en cliquant par exemple aux endroits représentés par des croix sur la figure 23, chaque clic sélectionnant la surface correspondante.

On choisit (étape 42) pour chaque surface ou groupe de surfaces, un revêtement que l'on veut simuler, au moyen du module de sélection 11 et de la base de données 5.

On détermine (étape 43) les caractéristiques géométriques des différentes surfaces sur lesquelles on désire simuler un revêtement.

On élabore (étape 44) une image sur laquelle les revêtements choisis ont été simulés sur les surfaces correspondantes.

La figure 24 illustre une simulation de la chambre à coucher avec du papier peint à rayures sur les murs et du parquet sur le sol.

On mémorise (étape 45) les images initiales finales et intermédiaires afin de pouvoir les réutiliser à bon escient sans avoir à les reconstruire.

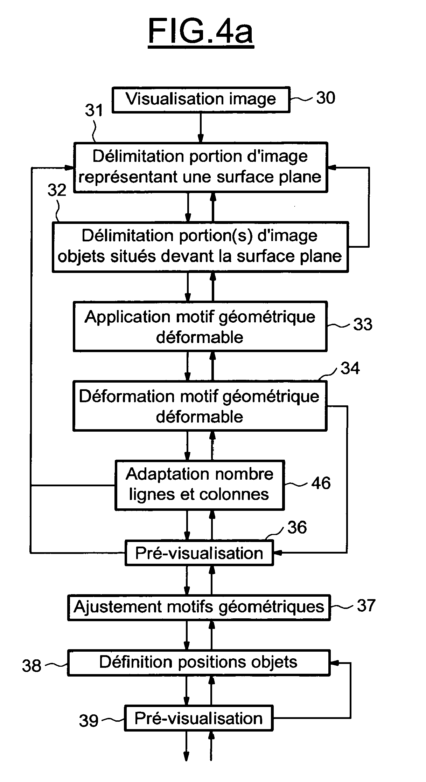

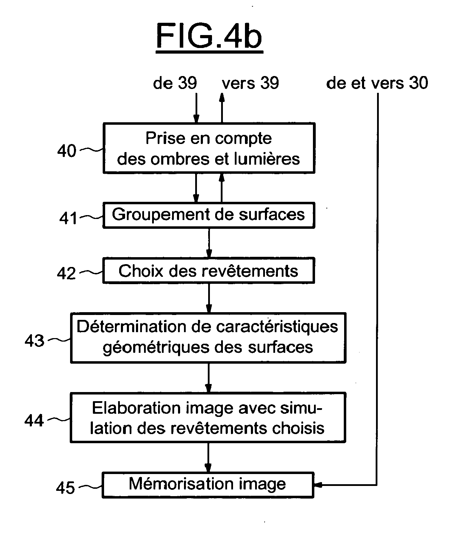

En variante, comme illustré sur les figures 4a et 4b, l'indication de taille (étape 35) est remplacée par une adaptation (étape 46) du nombre de lignes et de colonnes des grilles en fonction des dimensions prédéterminées d'un carreau élémentaire des grilles, afin que la surface prédéterminée associée à un carreau élémentaire soit en correspondance sur la surface à simuler.

Les modules de détermination, d'élaboration, utilisent une mise en correspondance entre un carreau réel de revêtement, et un carreau de la grille de l'image. L'échelle des textures est déformée et modifiée, par la mise en correspondance, telle qu'explicitée, par exemple dans le document "Perspective Mappings Between Quadrilaterals" de David Eberly, disponible en ligne à l'adresse http://geometrictools.com/Documentation/perspective2.pdf.

L'invention permet d'élaborer des caractéristiques géométriques d'une image encodée numériquement, de manière aisée et non contraignante pour l'utilisateur.

En outre, l'invention permet de simuler autant de combinaisons de revêtements de surfaces que l'on souhaite, afin de choisir la décoration d'une pièce ou d'un extérieur, en visualisant à l'avance le résultat, ce qui permet d'éviter nombre de déceptions et de regrets quant au choix des revêtements.

## Revendications

1. Procédé d'élaboration de caractéristiques géométriques d'une image encodée numériquement, **caractérisé en ce que** :
on visualise l'image (30),
on délimite (31) une portion de l'image représentant une surface sensiblement plane,
on applique (33) un motif géométrique déformable prédéterminé sur l'image à l'endroit de ladite portion d'image délimitée,
on déforme (34) le motif de manière à le faire correspondre à ladite portion d'image, et
on détermine (43) des caractéristiques géométriques de ladite surface à partir de la déformation du motif.

2. Procédé selon la revendication 1, dans lequel :
on sélectionne (42) un revêtement parmi un ensemble de revêtements stocké dans une base de données (5), et
on élabore (44) une image de ladite surface recouverte par ledit revêtement en fonction des caractéristiques géométriques de la surface.

3. Procédé selon la revendication 1 ou 2, dans lequel le motif est une grille comprenant un quadrillage constitué d'un ensemble prédéterminé de lignes et de colonnes de carrés élémentaires de surface prédéterminée.

4. Procédé selon la revendication 3, dans lequel, pour chacune des deux directions de ladite portion d'image représentant ladite surface, on indique la taille réelle d'un élément de ladite surface visualisée selon un axe de la grille superposée.

5. Procédé selon la revendication 3, dans lequel, on adapte le nombre de lignes et de colonnes de la grille en fonction de la taille d'un côté d'un carré élémentaire de la grille et des dimensions de ladite surface.

6. Procédé selon l'une quelconque des revendications 1 à 5, dans lequel on délimite une ou plusieurs portions de ladite image correspondant à la représentation d'objets situés devant ladite surface.

7. Procédé selon la revendication 6, dans lequel on utilise un zoom pour affiner la délimitation (30) desdites portions de ladite image correspondant à la représentation desdits objets situés devant ladite surface et/ou la délimitation (31) de ladite portion de ladite image représentant ladite surface.

8. Procédé selon l'une quelconque des revendications 1 à 7, dans lequel, on ajuste les motifs géométriques respectivement superposés à une pluralité de portions de l'image représentant des surfaces sensiblement planes.

9. Procédé selon l'une quelconque des revendications 6 à 8, dans lequel on pré-visualise (36) les positions respectives desdites portions d'images délimitées et/ou on pré-visualise (38) le positionnement respectifs des motifs géométriques.

10. Procédé selon l'une quelconque des revendications 6 à 10, dans lequel on définit (38) les positions respectives desdites portions d'images délimitées.

11. Procédé selon l'une quelconque des revendications 2 à 10, dans lequel on groupe (41) plusieurs portions délimitées de l'image représentant des surfaces sensiblement planes, pour élaborer une image desdites surfaces de groupement recouvertes simultanément par un même revêtement sélectionné.

12. Procédé selon l'une quelconque des revendications 1 à 11, dans lequel on prend en compte (40) les ombres et lumières présentes sur lesdites surfaces, et on restitue (44) lesdites ombres et lumières sur les images élaborées comprenant les surfaces recouvertes par des revêtements respectifs, en tenant compte dudit revêtement.

13. Procédé selon l'une quelconque des revendications 1 à 12, dans lequel, on mémorise (45) des images non traitées, des images comprenant lesdites portions délimitées, et des images avec surfaces simulées recouvertes par un revêtement.

14. Programme d'ordinateur stocké sur un support de stockage de données, **caractérisé en ce qu'**il comprend des codes d'instructions adaptés pour mettre en oeuvre un procédé selon l'une quelconque des revendications précédentes, lorsqu'il est exécuté au sein d'un module de calcul.

15. Système d'élaboration de caractéristiques géométriques d'une image encodée numériquement comprenant un dispositif d'affichage (2) apte à afficher une image numérisée, communiquant avec une unité de commande (4), et comprenant une interface homme-machine (6) et des moyens de fourniture de données (3) au système via ladite interface homme-machine (6), **caractérisé en ce qu'**il comprend :
un moyen d'affichage (7) pour afficher une image encodée numériquement sur le dispositif d'affichage (2),
un premier moyen de délimitation (8) pour délimiter une portion de l'image représentant une surface sensiblement plane,
un moyen de traitement (9) pour appliquer un motif géométrique déformable prédéterminé sur l'image à l'endroit de ladite portion d'image délimitée et déformer le motif de manière à le faire correspondre à ladite portion d'image, et
un moyen de détermination (10) pour déterminer des caractéristiques géométriques de ladite surface à partir de la déformation du motif.

16. Système selon la revendication 15, comprenant un moyen de sélection (11) pour sélectionner un revêtement parmi un ensemble de revêtements stocké dans une base de données (5), et un moyen d'élaboration (12) pour élaborer une image de ladite surface recouverte par ledit revêtement en fonction des caractéristiques géométriques de la surface.

17. Système selon la revendication 15 ou 16, dans lequel le moyen de traitement (9) est adapté pour appliquer une grille comprenant un quadrillage constitué d'un ensemble prédéterminé de lignes et de colonnes de carrés élémentaires de surface prédéterminée.

18. Système selon la revendication 17, comprenant un moyen d'indication (13) pour indiquer la taille réelle d'un élément de ladite surface visualisée selon un axe de la grille superposée, pour chacune des deux dimensions de ladite portion d'image représentant ladite surface.

19. Système selon la revendication 17, comprenant un moyen d'adaptation (22), pour adapter le nombre de lignes et de colonnes de la grille en fonction de la taille d'un côté d'un carré élémentaire de la grille et des dimensions de ladite surface.

20. Système selon l'une quelconque des revendications 15 à 19, comprenant un deuxième moyen de délimitation (14) pour délimiter une ou plusieurs portions de ladite image correspondant à la représentation d'objets situés devant ladite surface.

21. Système selon la revendication 20, comprenant un moyen de zoom (15) pour affiner la délimitation desdites portions de ladite image correspondant à la représentation desdits objets situés devant ladite surface et/ou la délimitation de ladite portion de ladite image représentant ladite surface.

22. Système selon l'une quelconque des revendications 15 à 21, comprenant un moyen d'ajustement (16) pour ajuster les motifs géométriques respectivement superposés à une pluralité de portions de l'image représentant des surfaces sensiblement planes.

23. Système selon l'une quelconque des revendications 20 à 22, comprenant un moyen de pré-visualisation (17) pour pré-visualiser les positions respectives desdites portions d'images délimitées et/ou le positionnement respectifs des motifs géométriques.

24. Système selon l'une quelconque des revendications 20 à 23, comprenant un moyen de définition (18) des positions respectives desdites portions d'images délimitées.

25. Système selon l'une quelconque des revendications 16 à 24, comprenant un moyen de groupement (19) pour grouper plusieurs portions délimitées de l'image représentant des surfaces sensiblement planes, ledit moyen d'élaboration (12) étant apte à élaborer une image desdites surfaces de groupement recouvertes simultanément par un même revêtement sélectionné.

26. Système selon l'une quelconque des revendications 15 à 25, comprenant un moyen de masque (20) pour prendre en compte les ombres et lumières présentes sur lesdites surfaces, et restituer lesdites ombres et lumières sur les images élaborées comprenant les surfaces recouvertes par des revêtements respectifs, en tenant compte dudit revêtement.

27. Système selon l'une quelconque des revendications 15 à 26, comprenant un moyen de mémorisation (21) pour mémoriser des images non traitées, des images comprenant lesdites portions délimitées, et des images avec surfaces simulées recouvertes par un revêtement.
